(19) Europäisches Patentamt
European Patent Office
Office européen des brevets

(11) **EP 4 224 372 A1**

(12) **EUROPEAN PATENT APPLICATION**

(43) Date of publication:
**09.08.2023  Bulletin 2023/32**

(21) Application number: **22157892.5**

(22) Date of filing: **22.02.2022**

(51) International Patent Classification (IPC):
**G06N 3/04** (2023.01)          **G06N 3/08** (2023.01)

(52) Cooperative Patent Classification (CPC):
**G06N 3/084; G06N 3/088**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **08.02.2022  US 202217667364**

(71) Applicant: **NavInfo Europe B.V.**
**5657 DB Eindhoven (NL)**

(72) Inventors:
• **BHAT, Prashant  Shivaram**
  **Eindhoven (NL)**

• **ZONOOZ, Bahram**
  **Eindhoven (NL)**
• **ARANI, Elahe**
  **Eindhoven (NL)**

(74) Representative: **van Breda, Jacobus et al**
  **Octrooibureau Los & Stigter B.V.**
  **P.O. Box 20052**
  **1000 HB Amsterdam (NL)**

Remarks:
Amended claims in accordance with Rule 137(2)
EPC.

(54) **SELF-SUPERVISED BASED APPROACH FOR MITIGATING CATASTROPHIC FORGETTING IN CONTINUAL LEARNING**

(57)    A two-stage computer-implemented method for continual learning intertwining task-agnostic and task-specific learning whereby self-supervised training is followed by supervised learning for each task. To further restrict the deviation from the learned representations in the self-supervised stage, a task-agnostic auxiliary loss is employed during the supervised stage.

**FIG. 1**

**Description**

BACKGROUND OF THE INVENTION

Field of the Invention

The invention relates to the deep neural network field, more particularly to a self-supervised based continual learning (CL) approach for mitigating catastrophic forgetting.

Background Art

Autonomous agents interacting in the real world are exposed to continuous streams of information and thus are required to learn and remember multiple tasks sequentially. Continual Learning (CL) [17, 18] deals with learning from continuous stream of data with the goal of gradually extending the acquired knowledge to solve multiple tasks sequentially. CL is also referred to as Lifelong learning, sequential learning or incremental learning [17]. CL over continuous stream of data remains one of the long-standing challenges in deep neural networks (DNNs) as they are prone to catastrophic forgetting i.e., a tendency of deep neural networks to lose knowledge pertaining to previous tasks when the information relevant to the current task is incorporated. Catastrophic forgetting often leads to abrupt drop in performance, or in the worst case, old knowledge is completely overwritten by new information [18].

Several approaches have been proposed in the literature to address the problem of catastrophic forgetting in CL. Replay-based methods [2, 3] store and replay a subset of samples belonging to previous tasks along with the current batch of samples. The performance of replay-based methods is commensurate with the buffer size. Therefore, these methods leave a large memory footprint. Regularization-based methods [4, 5] insert a regularization term to consolidate the previous knowledge when training on new tasks. These methods avoid using memory buffer altogether alleviating the memory requirements. Parameter isolation methods [6] allocate distinct set of parameters to distinct tasks thereby minimizing the interference.

Although the aforementioned approaches have been partially successful in mitigating catastrophic forgetting, they still suffer from several shortcomings. Since CL methods rely extensively on cross-entropy loss for classification tasks, they are prone to lack of robustness to noisy labels [25] and the possibility of poor margins [26] affecting their ability to generalize across tasks. Furthermore, the optimization objective in cross-entropy loss encourages learning of representations optimal for the current task sidelining the representations that might be necessary for the future tasks, resulting in prior information loss [1]. Also, the representations of the observed tasks drift when new tasks appear in the incoming data stream exacerbating the backward interference. The inventors assume that task-specific learning is the root cause of several other problems and is not well-equipped to deal with catastrophic forgetting.

There have been efforts to combine self-supervised learning into CL. Gallardo et al (2021) [7] empirically showed that self-supervised pre-training yields representations that generalize better across tasks than supervised pre-training in CL. In many real-world CL scenarios however, the data distribution of the future tasks is not known beforehand. Pre-training on a different data distribution often leads to domain shift subsequently reducing the generalizability of the learned representations. Furthermore, longer task sequences diminish the effect of self-supervised pre-training as the learned representations are repeatedly overwritten to maximize the performance on the current task.

Owing to additional computational effort, some of the approaches (e.g. [8, 9]) relinquished pre-training altogether and employed auxiliary pretext task to boost task-agnostic learning. However, these approaches only show a marginal improvement over the baseline methods. To mitigate catastrophic forgetting further, it is pertinent to learn task-agnostic representations. However, an effective approach integrating SSL into CL is still missing.

Discussion of any references or publications herein is given for more complete background and is not to be construed as an admission that such references or publications are prior art for patentability determination purposes.

BRIEF SUMMARY OF THE INVENTION

It is an object of the current invention to correct the shortcomings of the prior art by improving forward facilitation while reducing backward interference in continual learning. This and other objects which will become apparent from the following disclosure, are provided with a self-supervised learning method for continual learning in deep neural networks having the features of one or more of the appended claims.

According to a first aspect of the invention, the proposed method for continual learning over non-stationary data streams comprises a number of sequential tasks wherein for each task a training budget is allocated and wherein said training budget is divided into a task-agnostic learning phase and a task-specific learning phase.

Suitably, the task-agnostic learning phase is followed by the task-specific learning phase. These features help bridge the aforementioned shortcomings without the need for SSL pre-training.

The task-agnostic learning phase comprises a self-supervised learning phase. Self-supervised learning offers the advantages of learning task-agnostic, robust representations generalizable across multiple tasks.

Solving pretext tasks created from known information can help in learning representations useful for downstream tasks. The task-agnostic learning phase is, therefore, cast as an instance-level discrimination task wherein the task-agnostic learning phase comprises the steps of:

- selecting a batch of N of random samples from a task-specific data distribution and from a data distribution stored in a memory buffer;
- Creating two highly correlated views of the sample by passing each sample in a batch through a stochastic augmentation module
- Creating positive and negative sets for each correlated view. The correlated views are used as positive samples while rest of the samples in a batch are treated as negatives for this positive pair.
- Solving the instance discrimination pretext task through contrastive learning using aforementioned positive and negative pairs.

In order to align the task-agnostic representations to the current task, the task-specific learning phase comprises a supervised learning phase.

The interplay between task-agnostic and task-specific learning objectives can lead to sharp drift in the feature space and erode the generic representations learned during task-agnostic learning. Multi-objective learning offers a viable solution to address this trade-off. Multi-objective learning can be thought of as a form of inductive transfer and is known to improve generalization. It is also data efficient as multiple objectives are learned simultaneously using shared representations.

The task-specific learning phase comprises the step of training classification head with cross-entropy objective. To further restrict the deviation from the learned representations in the self-supervised phase, the supervised learning phase comprises of rotation prediction as a task-agnostic auxiliary loss function. Employing rotation prediction as an auxiliary loss preserves the task-agnostic features.

Objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

BRIEF DESCRIPTION OF THE SEVERAL VIEWS OF THE DRAWINGS

The accompanying drawings, which are incorporated into and form a part of the specification, illustrate one or more embodiments of the present invention and, together with the description, serve to explain the principles of the invention. The drawings are only for the purpose of illustrating one or more embodiments of the invention and are not to be construed as limiting the invention. In the drawings:

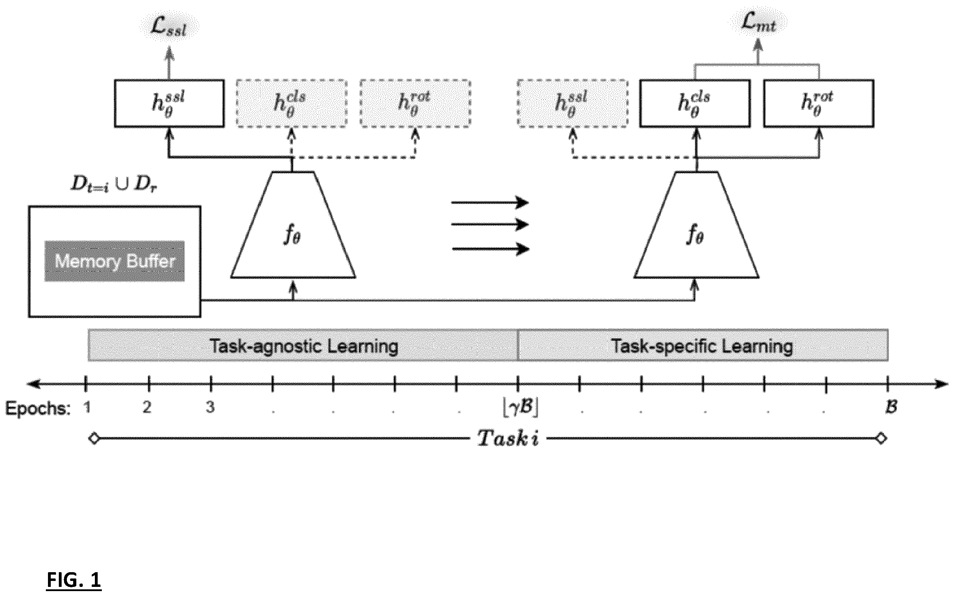

Figure 1 shows a diagram that summarizes a method according to an embodiment of the present invention.

DETAILED DESCRIPTION OF THE INVENTION

Continual learning normally consists of T sequential tasks. During each task, the input samples and the corresponding labels $(x_t, y_t)$ are drawn from the task specific data distribution $D_t$. Our continual learning model consists of a backbone network $f_\theta$ and three heads $\left( h_\theta^{ssl}, h_\theta^{cls}, h_\theta^{rot} \right)$. The continual learning model $g_\theta = \left\{ f_\theta, h_\theta^{ssl}, h_\theta^{cls}, h_\theta^{rot} \right\}$ is sequentially optimized on one task at a time up to the current one $t \in 1, \ldots, T_c$. The objective function is therefore as follows:

$$L_{T_c} = \sum_{t=1}^{T_c} \mathbb{E}_{(x_t, y_t) \sim D_t} \left[ l_{ce} \left( \sigma \left( h_\theta^{cls} (f_\theta(x_t)) \right), y_t \right) \right] \quad (\text{Eq. 1})$$

where $\sigma$ is a softmax function and $l_{ce}$ is a classification loss, generally a cross-entropy loss. Continual learning is especially challenging since the data from the previous tasks are unavailable i.e. at any point during training, the model $g_\theta$ has access to the current data distribution $D_t$ alone. As the objective function in Eq. (1) is solely optimized for the current task, it leads to overfitting on the current task and catastrophic forgetting of older tasks. Replay-based methods sought to address this problem by storing a subset of training data from previous tasks and replaying them alongside current task samples. For replay-based methods, Eq. (1) can thus be rewritten as:

$$L_{cls} = L_{T_c} + \mathbb{E}_{(x_t,y_t) \sim D_r} \left[ l_{ce} \left( \sigma \left( h_\theta^{cls}(f_\theta(x_t)) \right), y_t \right) \right] \quad \text{Eq. 2}$$

where $D_r$ represents the distribution of samples stored in the buffer. Although cross-entropy loss is widely used for classification tasks in continual learning, it suffers from several shortcomings such as lack of robustness to noisy labels and the possibility of poor margins, affecting the ability to generalize across tasks. Self-supervised learning offers an alternative by learning task-agnostic, robust, and generalizable representations. Therefore, a two-stage training consisting of task-agnostic learning followed by task-specific learning can help bridge the aforementioned shortcomings without the need for pre-training.

Task-agnostic learning phase:

The task-agnostic learning phase of the disclosed method, as depicted in figure 1, is casted as an instance-level discrimination task. For a set of $N$ randomly sampled images, each image is passed through two sets of augmentations $\alpha', \alpha'' \sim A$ producing $2N$ images per minibatch. Therefore, each image within $2N$ samples will have a unique positive pair and $2(N - 1)$ negative samples. Let $Z = h_\theta^{ssl}(f_\theta(.))$ be a projection matrix of $2N$ augmented samples and sim(.,.) denote cosine similarity. The self-supervised contrastive loss for a positive pair of examples $(i,j)$ is defined as:

$$l(i,j) = -\log \frac{e^{sim(z_i,z_j)/T_c}}{\sum_{k=1}^{2N} \mathbb{1}_{[k \neq i]} e^{(z_i,z_k)/T_c}} \quad (\text{Eq. 3})$$

Contrastive learning in Eq. (3) learns visual representations by contrasting semantically similar (positive) and dissimilar (negative) pairs of data samples such that similar pairs have the maximum agreement via a contrastive loss in the latent space through Noise Contrastive Estimation (NCE). Given a limited training time for each task, it is pertinent to learn task-agnostic features that are in line with the class boundaries to avoid interference in the downstream tasks. Eq. 3 is then adapted to leverage label information. Within each minibatch, normalized embeddings belonging to the same class are pulled together while those belonging to other classes are pushed away in the latent space.

$$l_{ssl}(i,j) = \frac{-1}{|P(i)|} \sum_{p \in P(i)} \log \frac{e^{sim(z_i,z_j)/T_c}}{\sum_{k=1}^{2N} \mathbb{1}_{[k \neq i]} e^{(z_i,z_k)/T_c}} \quad (\text{Eq. 4})$$

where $P(i)$ is a set of indices of samples belonging to the same class as the positive pair and $|P(i)|$ is its cardinality. While Eq. 4 is a simple extension to contrastive loss, it eliminates the need for hard negative mining.

Task-specific learning phase:

To align the task-agnostic representations to the current task, the classification head $h_\theta^{cls}$ is trained with cross-entropy objective defined in Eq. 2. However, the interplay between task-agnostic and task-specific learning objectives can lead to sharp drift in the feature space and erode the generic representations learned during task-agnostic learning.

Multi-objective learning offers a viable solution to address this trade-off. Multi-objective learning can be thought of as a form of inductive transfer and is known to improve generalization. It is also data efficient as multiple objectives are learned simultaneously using shared representations.

Furthermore, a rotation prediction is employed as an auxiliary loss to preserve the task-agnostic features. During task-specific stage of each task, input samples $x \in D_t \cup D_r$ are rotated by a fixed angle in addition to other transformations. The learning objective is to match task-specific ground truths $y \in D_t \cup D_r$ as well as auxiliary ground truths $y^a \in \{0°, 90°, 180°, 270°\}$, i.e.

$$L_{mo} = \alpha L_{cls} + \beta \, \mathbb{E}_{x \in D_t \cup D_r} \left[ l_{ce} \left( \sigma \left( h_\theta^{rot}(f_\theta(x)) \right), y^a \right) \right] \quad (\text{Eq. 5})$$

where $\alpha$ and $\beta$ are hyperparameters for adjusting the magnitudes of two losses.

Algorithm 1 summarizes the proposed method in detail.

---

**Algorithm 1** The Proposed Method

---

**input:** training budget $\mathcal{B}$ and ratio $0 < \gamma < 1$, model $g_\theta$

1: **for all** tasks $t \in \{1, 2, ..., T\}$ **do**
2:     **for** $e = 0 : \lfloor \gamma \mathcal{B} \rfloor$ **do**    ▷ **Task-agnostic Learning**
3:         **for** minibatch $(X_m, Y_m)_{m=1}^M \in \mathcal{D}_t \cup \mathcal{D}_r$ **do**
4:             Draw augmentation functions $a', a'' \sim A$
5:             $X = \{a'(X_m), a''(X_m)\}$
6:             $Z = h_\theta^{ssl}(f_\theta(X))$
7:             $\mathcal{L}_{ssl} = \frac{1}{2N} \sum_{k=1}^N [\, l_{ssl}(2k-1, 2k) + l_{ssl}(2k, 2k-1)]$
8:             update the networks $f_\theta$ and $h_\theta^{ssl}$
9:     **for** $e = \lfloor \gamma \mathcal{B} \rfloor : \mathcal{B}$ **do**    ▷ **Task-specific Learning**
10:         **for** minibatch $(X_m, Y_m)_{m=1}^M \in \mathcal{D}_t \cup \mathcal{D}_r$ **do**
11:             Draw rotation $a \sim 0^0, 90^0, 180^0, 270^0$
12:             $F = f_\theta(a(X_m))$
13:             $Z^{cls}, Z^{rot} = h_\theta^{cls}(F), h_\theta^{rot}(F)$
14:             Compute $L_{mo}$
15:             update the networks $f_\theta$, $h_\theta^{cls}$ and $h_\theta^{rot}$
16:             update replay buffer $\mathcal{D}_r$

---

Embodiments of the present invention can include every combination of features that are disclosed herein independently from each other. Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations.

For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

## REFERENCES

1. Song Zhang, Gehui Shen, and Zhi-Hong Deng. Self-supervised learning aided class-incremental lifelong learning. arXiv preprint arXiv:2006.05882, 2020

2. Pietro Buzzega, Matteo Boschini, Angelo Porrello, Davide Abati, and Simone Calderara. Dark experience for general continual learning: a strong, simple baseline. In Advances in Neural Information Processing Systems, volume 33, pages 15920-15930. Curran Associates, Inc., 2020.

3. Roger Ratcliff. Connectionist models of recognition memory: constraints imposed by learning and forgetting functions. Psychological review, 97(2):285, 1990

4. Jonathan Schwarz, Wojciech Czarnecki, Jelena Luketina, Agnieszka Grabska-Barwinska, Yee Whye Teh, Razvan Pascanu, and Raia Hadsell. Progress & compress: A scalable framework for continual learning. In International Conference on Machine Learning, pages 4528-4537. PMLR, 2018.

5. Friedemann Zenke, Ben Poole, and Surya Ganguli. Continual learning through synaptic intelligence. In Doina Precup and Yee Whye Teh, editors, Proceedings of the 34th International Conference on Machine Learning, volume 70 of Proceedings of Machine Learning Research, pages 3987-3995. PMLR, 06-11 Aug 2017

6. Andrei A Rusu, Neil C Rabinowitz, Guillaume Desjardins, Hubert Soyer, James Kirkpatrick, Koray Kavukcuoglu, Razvan Pascanu, and Raia Hadsell. Progressive neural networks. arXiv preprint arXiv:1606.04671, 2016

7. Jhair Gallardo, Tyler L. Hayes, and Christopher Kanan. Self-supervised training enhances online continual learning, 2021

8. Pratik Mazumder, Pravendra Singh, and Piyush Rai. Fewshot lifelong learning. In Proceedings of the AAAI Conference on Artificial Intelligence, volume 35, pages 2337-2345, 2021

9. Jong-Chyi Su, Subhransu Maji, and Bharath Hariharan. When does self-supervision improve few-shot learning? In European Conference on Computer Vision, pages 645-666. Springer, 2020.

10. Gamaleldin Elsayed, Dilip Krishnan, Hossein Mobahi, Kevin Regan, and Samy Bengio. Large margin deep networks for classification. In Advances in Neural Information Processing Systems, volume 31. Curran Associates, Inc., 2018.

11. Sainbayar Sukhbaatar, Joan Bruna, Manohar Paluri, Lubomir Bourdev, and Rob Fergus. Training convolutional networks with noisy labels. In 3rd International Conference on Learning Representations, ICLR 2015, 2015

12. Prannay Khosla, Piotr Teterwak, Chen Wang, Aaron Sarna, Yonglong Tian, Phillip Isola, Aaron Maschinot, Ce Liu, and Dilip Krishnan. Supervised contrastive learning. arXiv preprint arXiv:2004.11362, 2020

13. Dan Hendrycks and Thomas Dietterich. Benchmarking neural network robustness to common corruptions and perturbations. In International Conference on Learningyo Representations, 2018

14. Fabian Küppers, Jan Kronenberger, Amirhossein Shantia, and Anselm Haselhoff. Multivariate confidence calibration for object detection. In The IEEE/CVF Conference on Computer Vision and Pattern Recognition (CVPR) Workshops, June 2020.

15. Mahdi Pakdaman Naeini, Gregory Cooper, and Milos Hauskrecht. Obtaining well calibrated probabilities using bayesian binning, 2015

16. Devansh Arpit, Stanislaw Jastrz ebski, Nicolas Ballas, David Krueger, Emmanuel Bengio, Maxinder S Kanwal, Tegan Maharaj, Asja Fischer, Aaron Courville, Yoshua Bengio, et al. A closer look at memorization in deep networks. In International Conference on Machine Learning, pages 233- 242. PMLR, 2017

17. Delange, M., Aljundi, R., Masana, M., Parisot, S., Jia, X., Leonardis, A., ... & Tuytelaars, T. (2021). A continual learning survey: Defying forgetting in classification tasks. IEEE Transactions on Pattern Analysis and Machine Intelligence.

18. Parisi, G. I., Kemker, R., Part, J. L., Kanan, C., & Wermter, S. (2019). Continual lifelong learning with neural networks: A review. Neural Networks, 113, 54-71.

19. Weiss, K., Khoshgoftaar, T. M., & Wang, D. (2016). A survey of transfer learning. Journal of Big data, 3(1), 1-40.

20. Newell, A., & Deng, J. (2020). How useful is self-supervised pretraining for visual tasks?. In Proceedings of the IEEE/CVF Conference on Computer Vision and Pattern Recognition (pp. 7345-7354).

21. Chen, T., Kornblith, S., Norouzi, M., & Hinton, G. (2020, November) . A simple framework for contrastive learning of visual representations. In International conference on machine learning (pp. 1597-1607). PMLR.

22. Grill, J. B., Strub, F., Altché, F., Tallec, C., Richemond, P. H., Buchatskaya, E., ... & Valko, M. (2020). Bootstrap your own latent: A new approach to self-supervised learning. arXiv preprint arXiv:2006.07733.

23. Vafaeikia, P., Namdar, K., & Khalvati, F. (2020). A Brief Review of Deep Multi-task Learning and Auxiliary Task Learning. arXiv preprint arXiv:2007.01126.

24. Xiao Liu, Fanjin Zhang, Zhenyu Hou, Zhaoyu Wang, Li Mian, Jing Zhang, and Jie Tang. Self-supervised learning: Generative or contrastive, 2020

25. Sainbayar Sukhbaatar, Joan Bruna, Manohar Paluri, Lubomir Bourdev, and Rob Fergus. Training convolutional networks with noisy labels. In3rd International Conference on Learning Representations, ICLR 2015, 2015.

26. Gamal Eldin Elsayed, Dilip Krishnan, Hossein Mobahi, Kevin Regan, and Samy Bengio. Large margin deep networks for classification. In Advances in Neural Information Processing Systems, volume 31. Curran Associates, Inc.,2018

**Claims**

1. A deep-learning based computer-implemented method for continual learning over non-stationary data streams comprising a number of sequential tasks ($T$) wherein for each task (t) a training budget ($B$) is allocated, wherein said training budget ($B$) is divided into:

   a task-agnostic learning phase; and
   a task-specific learning phase.

2. The method according to claim 1, wherein the task-agnostic learning phase is followed by the task-specific learning phase.

3. The method according to claim 1 or 2, wherein the task-agnostic learning phase comprises a self-supervised learning phase.

4. The method according to claim 3, wherein the supervised learning phase comprises at least one task-agnostic auxiliary loss function.

5. The method according to any one of claims 1 - 4, wherein the task-specific learning phase comprises a supervised learning phase.

6. The method according to any one of claims 1 - 5, wherein the task-specific learning phase comprises at least one task-agnostic auxiliary loss function.

7. The method according to any one of claims 4 - 6, wherein the at least one task-agnostic auxiliary loss function comprises a rotation prediction.

8. The method according to any one of claims 1 - 7, wherein the task-agnostic learning phase is an instance-level discrimination task wherein the task-agnostic learning phase comprises the steps of:

   selecting a number ($N$) of random samples from a task-specific data distribution and/or from a data distribution stored in a memory buffer;
   at least doubling the number ($N$) of samples by passing each sample through at least two augmentations;
   extracting at least one positive pair of samples;
   extracting at least one negative pair of samples; and solving a contrastive loss function for said positive and negative pairs.

9. The method according to any one of claims 1 - 8, wherein the task-specific learning phase comprises the step of training a classification head with cross-entropy objective.

10. The method according to claim 9, wherein said at least one cross-entropy objective is based on experience replay.

11. The method according to any one of claims 1 - 10, wherein the task-specific learning phase comprises the step of matching task-specific ground truths and auxiliary ground truths for adjusting a magnitude of the primary loss function and a magnitude of the auxiliary loss function.

**Amended claims in accordance with Rule 137(2) EPC.**

1. A deep-learning based computer-implemented method for continual learning over non-stationary data streams comprising a number of sequential tasks (*T*) wherein for each task (*t*) a training budget (*B*) is allocated, wherein said training budget (*B*) is divided into:

   a task-agnostic learning phase; and
   a task-specific learning phase wherein the task-agnostic learning phase is followed by the task-specific learning phase for intertwining said task-agnostic learning phase and said task-specific learning phase within a single continual learning model.

2. The method according to claim 1, wherein the task-agnostic learning phase comprises a self-supervised learning phase.

3. The method according to claim 2, wherein the self-supervised learning phase comprises at least one task-agnostic auxiliary loss function.

4. The method according to any one of claims 1 - 3, wherein the task-specific learning phase comprises a supervised learning phase.

5. The method according to any one of claims 1 - 4, wherein the task-specific learning phase comprises at least one task-agnostic auxiliary loss function.

6. The method according to any one of claims 3 - 5, wherein the at least one task-agnostic auxiliary loss function comprises a rotation prediction.

7. The method according to any one of claims 1 - 6, wherein the task-agnostic learning phase is an instance-level discrimination task wherein the task-agnostic learning phase comprises the steps of:

   selecting a number (*N*) of random samples from a task-specific data distribution corresponding to a current task and/or from a previous data distribution stored in a memory buffer;
   at least doubling the number (*N*) of samples by passing
   each sample through at least two augmentations, wherein said at least two augmentations comprise creating two correlated views of the input sample;
   extracting at least one positive pair of samples and at least one negative pair of samples, wherein correlated views are considered positive samples and remaining samples are considered negative samples; and
   solving a contrastive loss function for said positive and negative pairs.

8. The method according to any one of claims 1 - 7, wherein the task-specific learning phase comprises the step of training a classification head with cross-entropy objective.

9. The method according to claim 8, wherein said at least one cross-entropy objective is based on experience replay.

10. The method according to claim 5, wherein the task-specific learning phase comprises the step of matching task-specific ground truths and auxiliary ground truths for adjusting a magnitude of the primary loss function and a magnitude of the auxiliary loss function.

FIG. 1

Europäisches
Patentamt

European
Patent Office

Office européen
des brevets

# EUROPEAN SEARCH REPORT

Application Number

EP 22 15 7892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUANG PHAM ET AL: "DualNet: Continual Learning, Fast and Slow", ARXIV.ORG, CORNELL UNIVERSITY LIBRARY, 201 OLIN LIBRARY CORNELL UNIVERSITY ITHACA, NY 14853, 1 October 2021 (2021-10-01), XP091071149, * abstract; sections: 1, 2.1, 2.2, 2.3, 2.4, 4.1, 5; equations 1, 2, 7;; figures 1, 2 * | 1-11 | INV.<br>G06N3/04<br>G06N3/08 |
| A,D | JHAIR GALLARDO ET AL: "Self-Supervised Training Enhances Online Continual Learning", ARXIV.ORG, CORNELL UNIVERSITY LIBRARY, 201 OLIN LIBRARY CORNELL UNIVERSITY ITHACA, NY 14853, 22 October 2021 (2021-10-22), XP091066142, * abstract; sections 1, 2, 4.2; figure 2 * | 1-11 | |

TECHNICAL FIELDS
SEARCHED (IPC)

G06N

The present search report has been drawn up for all claims

| Place of search | Date of completion of the search | Examiner |
|---|---|---|
| The Hague | 23 August 2022 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SONG ZHANG ; GEHUI SHEN ; ZHI-HONG DENG.** Self-supervised learning aided class-incremental lifelong learning. *arXiv:2006.05882,* 2020
- Dark experience for general continual learning: a strong, simple baseline. **PIETRO BUZZEGA ; MATTEO BOSCHINI ; ANGELO PORRELLO ; DAVIDE ABATI ; SIMONE CALDERARA.** Advances in Neural Information Processing Systems. Curran Associates, Inc, 2020, vol. 33, 15920-15930
- **ROGER RATCLIFF.** Connectionist models of recognition memory: constraints imposed by learning and forgetting functions. *Psychological review,* 1990, vol. 97 (2), 285
- Progress & compress: A scalable framework for continual learning. **JONATHAN SCHWARZ ; WOJCIECH CZARNECKI ; JELENA LUKETINA ; AGNIESZKA GRABSKA-BARWINSKA ; YEE WHYE TEH ; RAZVAN PASCANU ; RAIA HADSELL.** International Conference on Machine Learning. PMLR, 2018, 4528-4537
- Continual learning through synaptic intelligence. **FRIEDEMANN ZENKE ; BEN POOLE ; SURYA GANGULI.** Proceedings of the 34th International Conference on Machine Learning. PMLR, 06 August 2017, vol. 70, 3987-3995
- **ANDREI A RUSU ; NEIL C RABINOWITZ ; GUILLAUME DESJARDINS ; HUBERT SOYER ; JAMES KIRKPATRICK ; KORAY KAVUKCUOGLU ; RAZVAN PASCANU ; RAIA HADSELL.** Progressive neural networks. *arXiv:1606.04671,* 2016
- **JHAIR GALLARDO ; TYLER L. HAYES ; CHRISTOPHER KANAN.** *Self-supervised training enhances online continual learning,* 2021
- **PRATIK MAZUMDER ; PRAVENDRA SINGH ; PIYUSH RAI.** Fewshot lifelong learning. *Proceedings of the AAAI Conference on Artificial Intelligence,* 2021, vol. 35, 2337-2345
- When does self-supervision improve few-shot learning?. **JONG-CHYI SU ; SUBHRANSU MAJI ; BHARATH HARIHARAN.** European Conference on Computer Vision. Springer, 2020, 645-666
- Large margin deep networks for classification. **GAMALELDIN ELSAYED ; DILIP KRISHNAN ; HOSSEIN MOBAHI ; KEVIN REGAN ; SAMY BENGIO.** Advances in Neural Information Processing Systems. Curran Associates, Inc, 2018, vol. 31

- **SAINBAYAR SUKHBAATAR ; JOAN BRUNA ; MANOHAR PALURI ; LUBOMIR BOURDEV ; ROB FERGUS.** Training convolutional networks with noisy labels. *3rd International Conference on Learning Representations,* 2015
- **PRANNAY KHOSLA ; PIOTR TETERWAK ; CHEN WANG ; AARON SARNA ; YONGLONG TIAN ; PHILLIP ISOLA ; AARON MASCHINOT ; CE LIU ; DILIP KRISHNAN.** Supervised contrastive learning. *arXiv:2004.11362,* 2020
- **DAN HENDRYCKS ; THOMAS DIETTERICH.** Benchmarking neural network robustness to common corruptions and perturbations. *International Conference on Learningyo Representations,* 2018
- **FABIAN KÜPPERS ; JAN KRONENBERGER ; AMIRHOSSEIN SHANTIA ; ANSELM HASELHOFF.** Multivariate confidence calibration for object detection. *The IEEE/CVF Conference on Computer Vision and Pattern Recognition (CVPR) Workshops,* June 2020
- **MAHDI PAKDAMAN NAEINI ; GREGORY COOPER ; MILOS HAUSKRECHT.** *Obtaining well calibrated probabilities using bayesian binning,* 2015
- A closer look at memorization in deep networks. **DEVANSH ARPIT ; STANISLAW JASTRZ EBSKI ; NICOLAS BALLAS ; DAVID KRUEGER ; EMMANUEL BENGIO ; MAXINDER S KANWAL ; TEGAN MAHARAJ ; ASJA FISCHER ; AARON COURVILLE ; YOSHUA BENGIO et al.** International Conference on Machine Learning. PMLR, 2017, 233-242
- **DELANGE, M. ; ALJUNDI, R. ; MASANA, M. ; PARISOT, S. ; JIA, X. ; LEONARDIS, A. ; TUYTELAARS, T.** A continual learning survey: Defying forgetting in classification tasks. *IEEE Transactions on Pattern Analysis and Machine Intelligence,* 2021
- **PARISI, G. I. ; KEMKER, R. ; PART, J. L. ; KANAN, C. ; WERMTER, S.** Continual lifelong learning with neural networks: A review. *Neural Networks,* 2019, vol. 113, 54-71
- **WEISS, K. ; KHOSHGOFTAAR, T. M. ; WANG, D.** A survey of transfer learning. *Journal of Big data,* 2016, vol. 3 (1), 1-40

- **NEWELL, A. ; DENG, J.** How useful is self-supervised pretraining for visual tasks?. *Proceedings of the IEEE/CVF Conference on Computer Vision and Pattern Recognition,* 2020, 7345-7354
- simple framework for contrastive learning of visual representations. **CHEN, T. ; KORNBLITH, S. ; NOROUZI, M. ; HINTON, G.** International conference on machine learning. PMLR, November 2020, 1597-1607
- **GRILL, J. B. ; STRUB, F. ; ALTCHÉ, F. ; TALLEC, C. ; RICHEMOND, P. H. ; BUCHATSKAYA, E. ; VALKO, M.** Bootstrap your own latent: A new approach to self-supervised learning. *arXiv:2006.07733,* 2020

- **VAFAEIKIA, P. ; NAMDAR, K. ; KHALVATI, F.** A Brief Review of Deep Multi-task Learning and Auxiliary Task Learning. *arXiv:2007.01126,* 2020
- **XIAO LIU ; FANJIN ZHANG ; ZHENYU HOU ; ZHAOYU WANG ; LI MIAN ; JING ZHANG ; JIE TANG.** *Self-supervised learning: Generative or contrastive,* 2020
- Large margin deep networks for classification. **GAMAL ELDIN ELSAYED ; DILIP KRISHNAN ; HOSSEIN MOBAHI ; KEVIN REGAN ; SAMY BENGIO.** Advances in Neural Information Processing Systems. Curran Associates, Inc, 2018, vol. 31